# EUROPEAN PATENT APPLICATION

(11) **EP 4 745 815 A1**
(43) Date of publication of application: **20.05.2026**
(21) Application number: 25814155.5
(22) Date of filing: 05.02.2025
(51) Int. Cl.: G06F 21/60

(54) **ACCESS ALERT METHOD AND ELECTRONIC DEVICE**

(30) Priority: 29.05.2024 CN 202410685566
(71) Applicant: Huawei Technologies Co., Ltd., Shenzhen, Guangdong 518129 (CN)
(72) Inventor: LIU, Zhuolin, Shenzhen, Guangdong 518129 (CN); YAN, Yongjie, Shenzhen, Guangdong 518129 (CN)
(74) Representative: Isarpatent
(86) International application number: PCT/CN2025/075783
(87) International publication number: WO 2025/246431

(57) **Abstract**

Embodiments of this application provide an access reminding method. The method includes: displaying a display object on a display interface of an electronic device when it is detected that a first application accesses a sensitive resource. The display object is used to remind a user that the first application is accessing the sensitive resource, and the display object is drawn by using a trusted execution environment TEE. In a process in which the first application accesses the sensitive resource, the display object is always displayed on the current display interface of the electronic device. According to the method, in the process in which the application accesses the sensitive resource, an access behavior of the application can be explicitly and clearly presented on the display interface of the electronic device, and the presented access behavior is always displayed on an upper layer without being obstructed by other display content. This can enhance user perception of a sensitive access behavior of the application.

## Description

This application claims priority to Chinese Patent Application No. 202410685566.6, filed with the China National Intellectual Property Administration on May 29, 2024 and entitled "ACCESS REMINDING METHOD AND ELECTRONIC DEVICE", which is incorporated herein by reference in its entirety.

### TECHNICAL FIELD

Embodiments of this application relate to the access reminding field, and more specifically, to an access reminding method and an electronic device.

### BACKGROUND

As application functions become increasingly rich, when performing some operations, more applications need to access system sensitive resources, such as a camera, a microphone, and a geographical location. To provide a user with privacy experience that ensures a sense of security and respond to a privacy requirement of the user, when an application accesses a system sensitive resource, a reminder needs to be sent to the user.

However, a current reminding manner has problems such as unclear expression, weak user perception, ineffective presentation form, and a tendency of being overlaid by another event.

### SUMMARY

This application provides an access reminding method and an electronic device. According to the method and the electronic device, in a process in which an application accesses a sensitive resource, an access behavior of the application can be explicitly and clearly presented on a display interface of the electronic device, and the presented access behavior is always displayed on an upper layer without being obstructed by other display content. This can enhance user perception of a sensitive access behavior of the application.

According to a first aspect, an access reminding method is provided. The method is applied to an electronic device, and the method includes: displaying a display object on a display interface of the electronic device when it is detected that a first application accesses a sensitive resource. The display object is used to remind a user that the first application is accessing the sensitive resource, and the display object is drawn by using a trusted execution environment (trusted execution environment, TEE). In a process in which the first application accesses the sensitive resource, the display object is always displayed on the current display interface of the electronic device. In some embodiments, the sensitive resource includes one or more of location information of the electronic device, a microphone of the electronic device, and a camera of the electronic device.

In some embodiments, the display object is an indication element.

The indication element is a display element used for a specific indication function. The indication element may be, for example, a display element like an indication dot, an indication icon, an indication number, an indication text, or an indication symbol. A display effect of the indication dot may be a colored bright dot displayed on a screen of the electronic device.

In this embodiment of this application, in the process in which the application accesses the sensitive resource, an access behavior of the application can be explicitly and clearly presented on the display interface of the electronic device, and the presented access behavior is always displayed on an upper layer without being obstructed by other display content. This can enhance user perception of a sensitive access behavior of the application.

With reference to the first aspect, in a possible implementation, after being drawn by using the TEE, the object is displayed on a first layer, and the first layer is an upper layer; and in the process in which the first application accesses the sensitive resource, the display object is always displayed on the current display interface of the electronic device. The upper layer is a non-overlayable layer and/or a tamper-proof layer.

In some embodiments, after the display object is drawn by using the trusted execution environment TEE, display configuration is performed on the display object in the TEE. An instruction that can be identified by hardware can be generated by using the display configuration. The instruction that can be identified by hardware is stored in a security zone, so that a hardware display driver displays the display object on the first layer based on the instruction that can be identified by hardware.

The security zone is a trusted environment zone in a system of the electronic device. The security zone may be a zone independent of the TEE, the security zone may be a zone that intersects with the TEE, or the security zone may belong to the TEE.

In some embodiments, the first layer may be an uppermost layer in all layers corresponding to the current display interface of the electronic device.

The first layer may be a layer specially created by the TEE for displaying the display object.

In some embodiments, the display object displayed on the first layer is drawn by using the TEE, so that the first layer has a security attribute. The security attribute of the first layer may reflect that the first layer has an access restriction. For example, access permission is that the TEE is readable and writable, and a display subsystem IP (display subsystem intellectual property, DSS IP) core is readable. This can prevent the first layer and the display object displayed on the first layer from being tampered with.

In this embodiment of this application, in the process in which the application accesses the system sensitive resource, a layer on which the display object is displayed is always an upper layer in all layers corresponding to the current display interface of the electronic device, so that the display object can always be displayed on the display interface of the electronic device and can be perceived by the user, thereby implementing non-overlayability of displaying of the display object.

With reference to the first aspect, in a possible implementation, the display object is displayed in a first window, and the first window is a top window in all windows corresponding to the current display interface of the electronic device.

In this embodiment of this application, when a display object needs to be displayed, the display object is drawn by creating a new window. In the process in which the application accesses the system sensitive resource, a window for displaying the display object is always a topmost window in a plurality of windows corresponding to the current display interface of the electronic device, and is not overlaid by another display window. In this way, the display object can always be displayed on the display interface of the electronic device and can be perceived by the user, thereby implementing non-overlayability of displaying of the display object.

With reference to the first aspect, in a possible implementation, before the displaying the display object on the display interface of the electronic device, the method further includes: displaying a first animation in a first interface control when it is detected that the first application accesses the sensitive resource. The first animation is used to remind the user that the first application is accessing the sensitive resource. The displaying the display object on the display interface of the electronic device includes: displaying the display object on the display interface of the electronic device when displaying of the first animation ends.

With reference to the first aspect, in a possible implementation, the displaying the first animation in the first interface control includes: determining whether the first interface control is displayed on the current display interface of the electronic device; and displaying the first animation in the first interface control when the first interface control is displayed on the current display interface of the electronic device.

With reference to the first aspect, in a possible implementation, the first interface control includes a status bar.

In this embodiment of this application, when it is detected that the application accesses the system sensitive resource, a corresponding animation may be first played for reminding, and then the display object is presented for reminding, so that a real-time behavior of accessing the system sensitive resource by the application can be more explicitly presented, and user perception of the sensitive access behavior of the application is further enhanced.

With reference to the first aspect, in a possible implementation, the displaying the display object on the display interface of the electronic device when it is detected that the first application accesses the sensitive resource includes: determining, based on access permission information of the first application when a behavior of accessing the sensitive resource by the first application is detected, whether access reminding needs to be performed; and displaying the display object on the display interface of the electronic device when it is determined that access reminding needs to be performed.

With reference to the first aspect, in a possible implementation, the determining, based on the access permission information of the first application, whether access reminding needs to be performed includes: obtaining the access permission information of the first application, where the access permission information of the first application is set by the user or is set by a system by default; and determining, when the access permission information of the first application includes information indicating that the first application is allowed to access the sensitive resource, that access reminding needs to be performed.

In this embodiment of this application, when a behavior of accessing the system sensitive resource by the application is detected, whether the application can successfully access the system sensitive resource (in other words, whether the application is allowed to access the system sensitive resource) may be determined based on the access permission information of the application. The display object is displayed only when the application can successfully access the system sensitive resource, to avoid incorrect displaying of the display object.

With reference to the first aspect, in a possible implementation, a color of the display object is a first color, and the first color corresponds to the sensitive resource.

Similarly, a color of the first animation is the first color, and the first color corresponds to the sensitive resource.

In this embodiment of this application, for access to different system sensitive resources, different colors may be used for presenting animations and/or display objects, so that the user can directly perceive, based on a color of a display object, a category of a currently accessed system sensitive resource, and user perception of a behavior of accessing the system sensitive resource can be further enhanced.

With reference to the first aspect, in a possible implementation, the method includes: cancelling displaying of the display object on the display interface of the electronic device when it is detected that accessing the sensitive resource by the first application ends.

According to a second aspect, an electronic device is provided. The electronic device includes a display module, configured to display a display object on a display interface of the electronic device when it is detected that a first application accesses a sensitive resource. The display object is used to remind a user that the first application is accessing the sensitive resource, and the display object is drawn by using a trusted execution environment TEE. In a process in which the first application accesses the sensitive resource, the display object is always displayed on the current display interface of the electronic device.

In some embodiments, the sensitive resource includes one or more of location information of the electronic device, a microphone of the electronic device, and a camera of the electronic device.

In some embodiments, the display object is an indication element.

The indication element is a display element used for a specific indication function. The indication element may be, for example, a display element like an indication dot, an indication icon, an indication number, an indication text, or an indication symbol. A display effect of the indication dot may be a colored bright dot displayed on a screen of the electronic device.

In this embodiment of this application, in the process in which the application accesses the sensitive resource, an access behavior of the application can be explicitly and clearly presented on the display interface of the electronic device, and the presented access behavior is always displayed on an upper layer without being obstructed by other display content. This can enhance user perception of a sensitive access behavior of the application.

With reference to the second aspect, in a possible implementation, after being drawn by using the TEE, the display object is displayed on a first layer, and the first layer is an upper layer; and in the process in which the first application accesses the sensitive resource, the display object is always displayed on the current display interface of the electronic device. The upper layer is a non-overlayable layer and/or a tamper-proof layer.

In some embodiments, after the display object is drawn by using the trusted execution environment TEE, display configuration is performed on the display object in the TEE. An instruction that can be identified by hardware can be generated by using the display configuration. The instruction that can be identified by hardware is stored in a security zone, so that a hardware display driver displays the display object on the first layer based on the instruction that can be identified by hardware.

The security zone is a trusted environment zone in a system of the electronic device. The security zone may be a zone independent of the TEE, the security zone may be a zone that intersects with the TEE, or the security zone may belong to the TEE.

In some embodiments, the first layer may be an uppermost layer in all layers corresponding to the current display interface of the electronic device.

The first layer may be a layer specially created by the TEE for displaying the display object.

In some embodiments, the display object displayed on the first layer is drawn by using the TEE, so that the first layer has a security attribute. The security attribute of the first layer may reflect that the first layer has an access restriction. For example, access permission is that the TEE is readable and writable, and a DSS IP is readable. This can prevent the first layer and the display object displayed on the first layer from being tampered with.

In this embodiment of this application, in the process in which the application accesses the system sensitive resource, a layer on which the display object is displayed is always an upper layer in all layers corresponding to the current display interface of the electronic device, so that the display object can always be displayed on the display interface of the electronic device and can be perceived by the user, thereby implementing non-overlayability of displaying of the display object.

With reference to the second aspect, in a possible implementation, the display object is displayed in a first window, and the first window is a top window in all windows corresponding to the current display interface of the electronic device.

In this embodiment of this application, when a display object needs to be displayed, the display object is drawn by creating a new window. In the process in which the application accesses the system sensitive resource, a window for displaying the display object is always a topmost window in a plurality of windows corresponding to the current display interface of the electronic device, and is not overlaid by another display window. In this way, the display object can always be displayed on the display interface of the electronic device and can be perceived by the user, thereby implementing non-overlayability of displaying of the display object.

With reference to the second aspect, in a possible implementation, the electronic device further includes: the display module, specifically configured to: display a first animation in a first interface control when it is detected that the first application accesses the sensitive resource, where the first animation is used to remind the user that the first application is accessing the sensitive resource; and display the display object on the display interface of the electronic device when displaying of the first animation ends.

With reference to the second aspect, in a possible implementation, the electronic device further includes: a determining module, configured to determine whether the first interface control is displayed on the current display interface of the electronic device. The display module is specifically configured to display the first animation in the first interface control when the first interface control is displayed on the current display interface of the electronic device.

With reference to the second aspect, in a possible implementation, the first interface control includes a status bar.

In this embodiment of this application, when it is detected that the application accesses the system sensitive resource, a corresponding animation may be first played for reminding, and then the display object is presented for reminding, so that a real-time behavior of accessing the system sensitive resource by the application can be more explicitly presented, and user perception of the sensitive access behavior of the application is further enhanced.

With reference to the second aspect, in a possible implementation, the determining module is further configured to: determine, based on access permission information of the first application when a behavior of accessing the sensitive resource by the first application is detected, whether access reminding needs to be performed. The display module is further specifically configured to display the display object on the display interface of the electronic device when it is determined that access reminding needs to be performed.

With reference to the second aspect, in a possible implementation, the electronic device further includes: an obtaining module, configured to obtain the access permission information of the first application, where the access permission information of the first application is set by the user or is set by a system by default. The determining module is specifically configured to determine, when the access permission information of the first application includes information indicating that the first application is allowed to access the sensitive resource, that access reminding needs to be performed.

In this embodiment of this application, when a behavior of accessing the system sensitive resource by the application is detected, whether the application can successfully access the system sensitive resource (in other words, whether the application is allowed to access the system sensitive resource) may be determined based on the access permission information of the application. The display object is displayed only when the application can successfully access the system sensitive resource, to avoid incorrect displaying of the display object.

With reference to the second aspect, in a possible implementation, a color of the display object is a first color, and the first color corresponds to the sensitive resource.

Similarly, a color of the first animation is the first color, and the first color corresponds to the sensitive resource.

In this embodiment of this application, for access to different system sensitive resources, different colors may be used for presenting animations and/or display objects, so that the user can directly perceive, based on a color of a display object, a category of a currently accessed system sensitive resource, and user perception of a behavior of accessing the system sensitive resource can be further enhanced.

With reference to the second aspect, in a possible implementation, the display module is further configured to cancel displaying of the display object on the display interface of the electronic device when it is detected that accessing the sensitive resource by the first application ends.

According to a third aspect, an electronic device is provided. The electronic device includes a memory and a processor. The memory is configured to store computer program code. The processor is configured to execute the computer program code stored in the memory, to implement the method according to any one of the first aspect or the possible implementations of the first aspect.

According to a fourth aspect, a computer-readable storage medium is provided. The computer-readable storage medium stores a computer program or instructions. When the computer program or the instructions are executed, the method according to any one of the first aspect or the possible implementations of the first aspect is implemented.

According to a fifth aspect, a chip is provided. The chip stores instructions. When the instructions are run on a device, the chip is caused to perform the method according to any one of the first aspect or the possible implementations of the first aspect.

According to a sixth aspect, a computer program product is provided. The computer program product stores a computer program or instructions. When the computer program or the instructions are executed, the method according to any one of the first aspect or the possible implementations of the first aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of an access reminding method;
FIG. 4(a) to FIG. 4(d) are a diagram of an interface of an access reminding method according to an embodiment of this application;
FIG. 5(a) to FIG. 5(c) are a diagram of an interface of another access reminding method according to an embodiment of this application;
FIG. 6(a) to FIG. 6(d) are a diagram of an interface of another access reminding method according to an embodiment of this application;
FIG. 7(a) to FIG. 7(c) are a diagram of an interface for setting privacy access permission for an application according to an embodiment of this application;
FIG. 8 is a schematic flowchart of an access reminding method according to an embodiment of this application;
FIG. 9 is a schematic flowchart of another access reminding method according to an embodiment of this application;
FIG. 10 is a diagram of a functional module of an access reminding apparatus according to an embodiment of this application;
FIG. 11 is a diagram of a method for displaying a display object according to an embodiment of this application; and
FIG. 12 is a diagram of another method for displaying a display object according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "multiple" or "a plurality of" means two or more than two.

Terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

Terms used in the following embodiments are merely intended to describe specific embodiments, but are not intended to limit this application. Singular expressions "one", "a", "the", "the foregoing", "this", and "the one" used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that one or more embodiments of this application include a specific feature, structure, or characteristic described with reference to the embodiments. Therefore, statements such as "an embodiment", "some embodiments", "another embodiment", and "some other embodiments" that appear in different places in this specification do not necessarily mean referring to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

A method provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

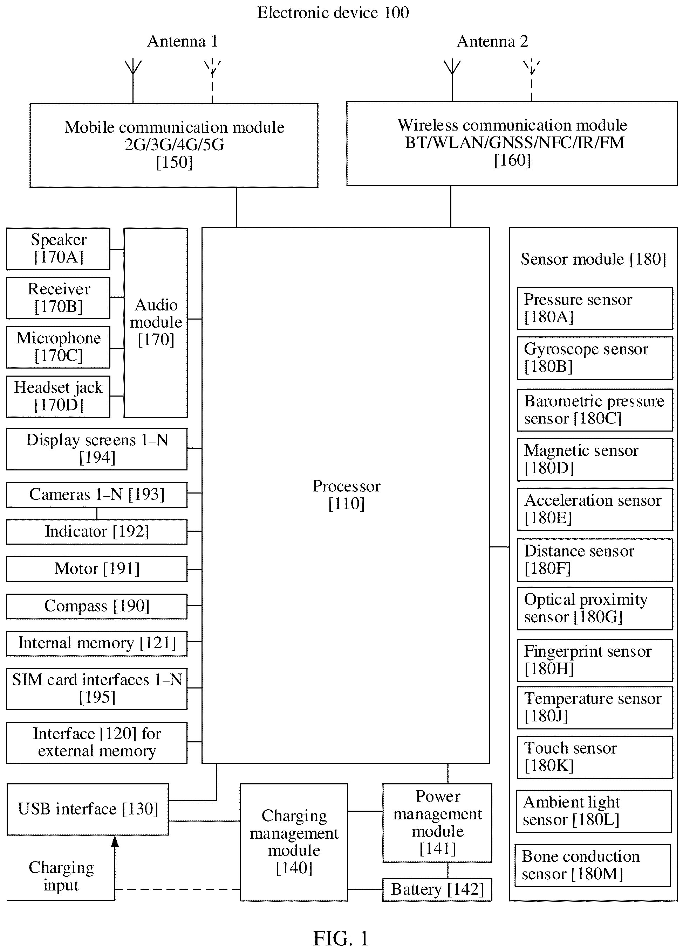

For example, FIG. 1 is a diagram of a structure of an electronic device 100. The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or data again, the instructions or data may be directly invoked from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, may be configured for data transmission between the electronic device 100 and a peripheral device, or may be configured to connect to a headset, to play audio through the headset. The interface may be further configured to connect to another electronic device like an AR device.

It may be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of the wired charger through the USB interface 130. In some embodiments of wireless charging, the charging management module 140 may receive wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display screen 194, the camera 193, the wireless communication module 160, and the like. The power management module 141 may be further configured to monitor a parameter like a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert, through the antenna 1, the signal into an electromagnetic wave for radiation. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-/highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), or displays an image or a video through the display screen 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert, through the antenna 2, the signal into an electromagnetic wave for radiation.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to perform mathematical and geometric computation for graphics rendering. The processor 110 may include one or more GPUs, which execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU can implement application such as intelligent cognition of the electronic device 100, for example, image recognition, facial recognition, speech recognition, and text understanding.

The interface for external memory 120 may be used to connect to an external memory card, for example, a micro SD card, to extend a storage capability of the electronic device 100. The external memory card communicates with the processor 110 through the interface for external memory 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or a phone book) and the like created in a process of using the electronic device 100. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The button 190 includes a power button, a volume button, and the like. The button 190 may be a mechanical button, or may be a touch-sensitive button. The electronic device 100 may receive button input, and generates button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also generate different vibration feedback effects for touch operations performed on different areas of the display screen 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network through the SIM card, to implement functions such as conversation and data communication. In some embodiments, the electronic device 100 uses an embedded-SIM (embedded-SIM, eSIM) card, namely, an embedded-SIM card. The eSIM card may be embedded into the electronic device 100, and cannot be separated from the electronic device 100.

It should be understood that a phone card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

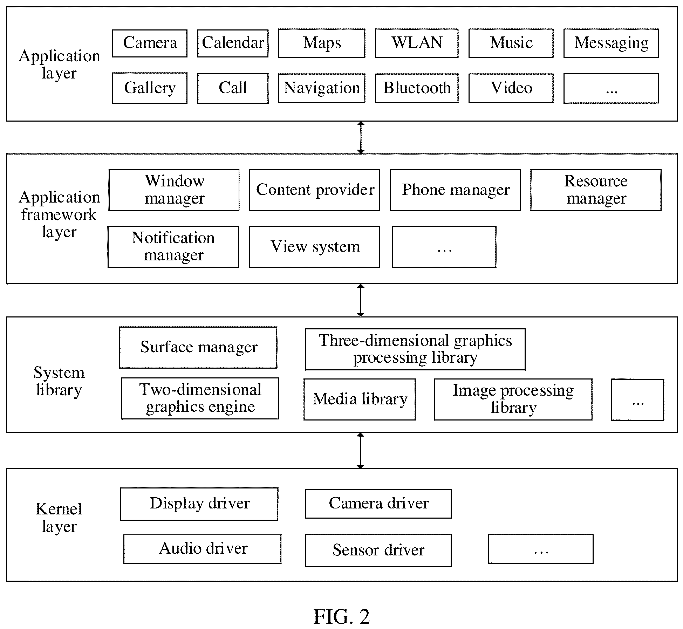

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Call, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and the like.

The content provider is configured to: store and obtain data, and cause the data to be accessed by an application. The data may include a video, an image, audio, calls that are made and answered, a browsing history, a bookmark, a phone book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or the indicator light blinks.

The Android runtime includes a core library and a virtual machine. The Android runtime is responsible for scheduling and management of the Android system.

The core library includes two parts: a function that needs to be invoked in java language, and a core library of Android.

The application layer and the application framework layer run in the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to, for example, an electronic device having a display function. For example, the technical solutions may be applied to a television, a desktop computer, a notebook computer, or a vehicle-mounted screen, may be applied to a portable electronic device like a mobile phone, a foldable display, a tablet computer, a camera, a video camera, a video recorder, a watch, or a band, may be applied to another electronic device having a display function, or may be applied to an electronic device in a 5G network, an electronic device in a future evolved public land mobile communication network (public land mobile network, PLMN), or the like. A main application scenario may be a system resource access reminding scenario of the electronic device.

To understand the solutions of this application more clearly, the following first describes related terms in embodiments of this application.

### 1. Trusted user interface (trusted user interface, TUI)

The TUI refers to providing trusted display and input for a security application in a trusted execution environment (trusted execution environment, TEE). The current TUI complies with a GP TUI in the global platform (global platform, GP) standard. A TUI API in the GP standard provides a developer of the security application (TA) with function support for interacting with users. The trusted application (trusted application, TA) running in the TEE invokes the GP TUI application programming interface (application programming interface, API) to securely display sensitive data to the user and obtain sensitive input from the user. During the use of the TUI, it can be ensured that the TEE controls a screen and is isolated from a rich execution environment (rich execution environment, REE) and another TA.

### GP: Global platform standard

As application functions become increasingly rich, when performing some operations, more applications need to access system sensitive resources, such as a camera, a microphone, and a geographical location. To provide a user with privacy experience that ensures a sense of security and respond to a privacy requirement of the user, when an application accesses a system sensitive resource, a reminder needs to be sent to the user.

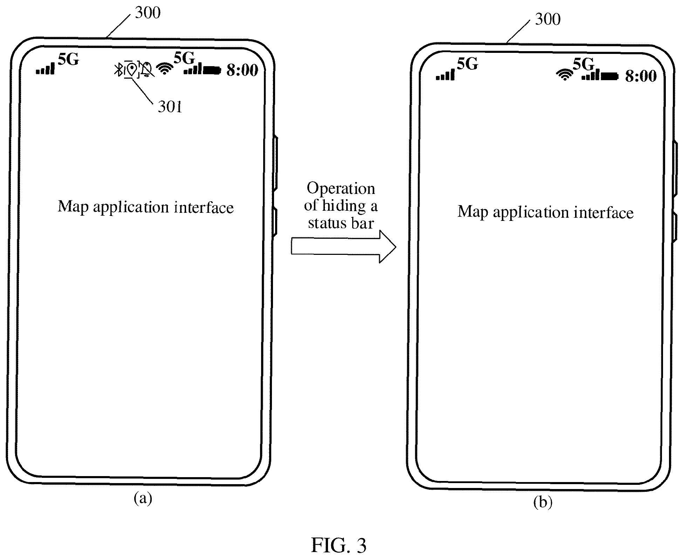

FIG. 3 is a diagram of an access reminding method.

As shown in (a) in FIG. 3, an electronic device 300 is currently using a map application, and in a process in which the electronic device 300 uses the map application, location information of the electronic device 300 needs to be accessed. In this case, an icon 301 is displayed in a status bar of the electronic device 300, and the icon 301 is used to remind a user that the map application is accessing the location information of the electronic device 300. The icon 301 is coupled to the status bar, and the icon 301 and another icon in the status bar are displayed simultaneously, and are in similar display forms. The display form of the icon 301 is not distinguished from that of the another icon in the status bar. Consequently, the user does not have strong perception of the icon 301.

As shown in (b) in FIG. 3, because the icon 301 is coupled to the status bar, after the user hides the status bar of the electronic device 300, even if the map application is currently accessing the location information of the electronic device 300, the icon 301 is also hidden synchronously with the status bar. Consequently, when the application accesses a system sensitive resource of the device, a behavior of accessing the system sensitive resource cannot be presented, and the user cannot perceive the behavior of accessing the system sensitive resource of the device by the application, and privacy security of the user cannot be ensured.

In addition, when a current display interface is switched to an immersive display interface of the map application, the status bar is not displayed, and the icon 301 is not displayed either.

Therefore, the foregoing access reminding method has problems such as unclear expression, weak user perception, ineffective presentation form, and a tendency of being overlaid by another interface.

In view of this, embodiments of this application provide an access reminding method and an electronic device. According to the method and the electronic device, in a process in which an application accesses a system sensitive resource, an access behavior of the application can be explicitly and clearly presented on a display interface of the device, and the presented access behavior is always displayed on an upper layer without depending on a status bar and being obstructed by other display content. This can enhance user perception of a sensitive system access behavior, and achieve consumer perception of "transparency and privacy security".

It should be noted that in embodiments of this application, an example in which the electronic device is a mobile phone is used for description. However, this does not constitute a limitation on a type of an electronic device to which the solutions of this application can be applied. The electronic device may alternatively be any electronic device having a screen display function, such as a tablet, a notebook computer, a PC screen, a vehicle-mounted screen, or a band. This is not limited in this application.

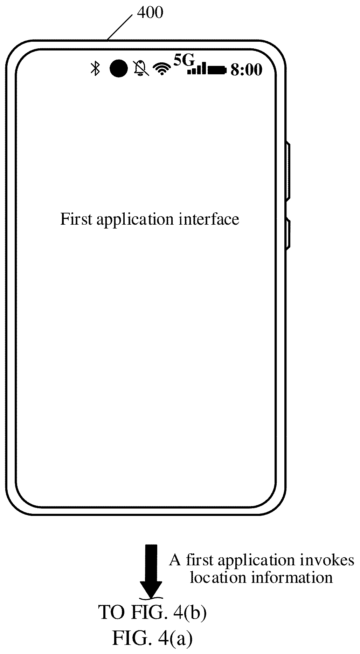

For example, FIG. 4(a) to FIG. 4(d) are a diagram of an interface of an access reminding method according to an embodiment of this application.

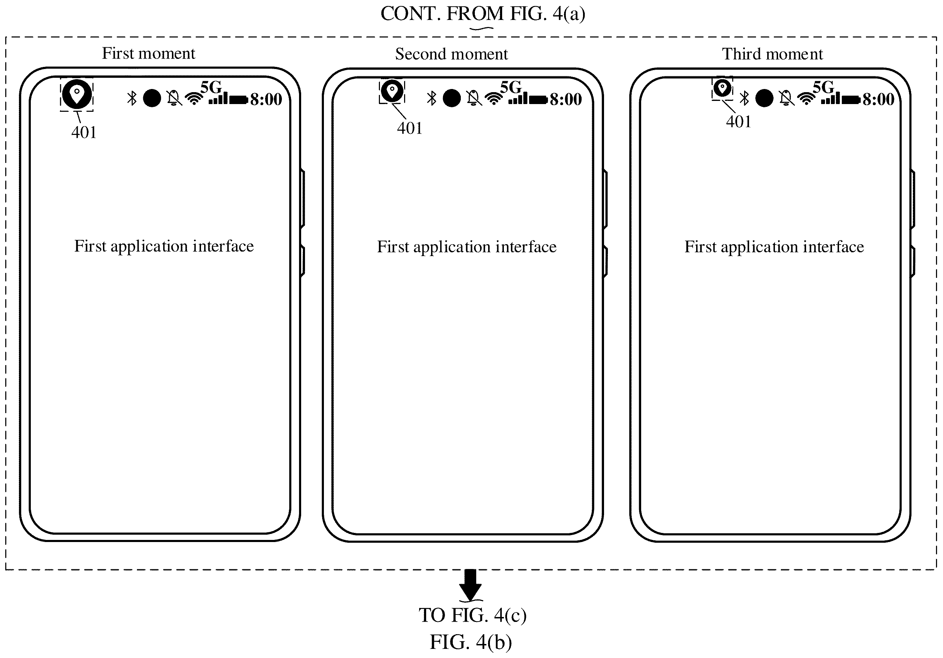

As shown in FIG. 4(a), an electronic device 400 is currently using a first application. When a user accesses location information of the electronic device 400 through the first application, a display interface of the electronic device is switched to that shown in FIG. 4(b).

As shown in FIG. 4(b), an icon 401 is displayed in a status bar of the electronic device 400. The icon 401 is used to remind the user that the first application is accessing the location information of the electronic device 400. The icon 401 may be displayed in the status bar of the electronic device 400, but the icon 401 does not depend on the status bar.

In a display manner, in the status bar of the electronic device 400, the icon 401 animates from left to right with a gradual reduction in size. For example, at a first moment in an animation playing process, the icon 401 of a first size is displayed at a first location; at a second moment in the animation playing process, the icon 401 of a second size is displayed at a second location; and at a third moment in the animation playing process, the icon 401 of a third size is displayed at a third location. The first size is greater than the second size, and the second size is greater than the third size.

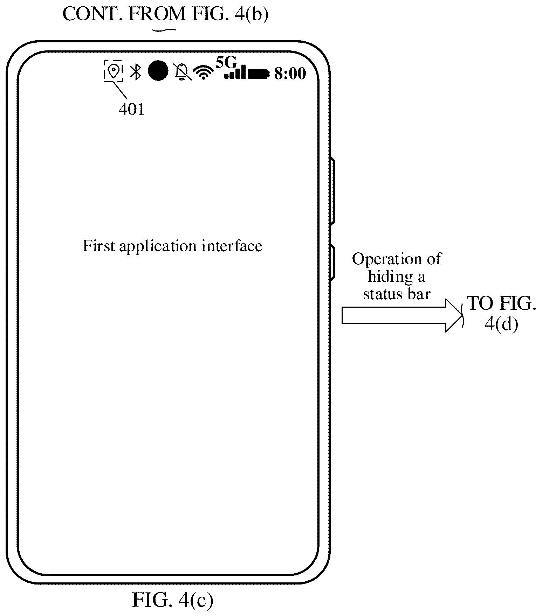

As shown in FIG. 4(c), after playing of the animation of the icon 401 ends, the icon 401 may be displayed in real time in the status bar of the electronic device 400.

In some embodiments, the icon 401 has a color identifier, for example, may be blue, or may be another color. A color of the icon 401 may be determined based on an interface color of the first application or the like.

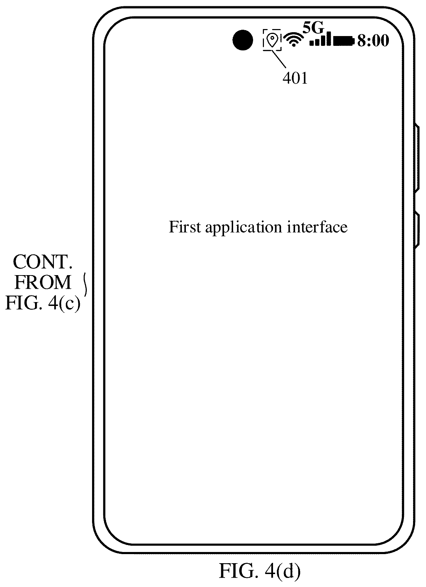

As shown in FIG. 4(d), after the user hides the status bar of the electronic device 400, the icon 401 is still displayed on the current display interface of the electronic device 400, and is not synchronously hidden with the status bar. In a process in which the first application accesses the location information of the electronic device 400, the icon 401 is always displayed on the current display interface of the electronic device 400. Displaying of the icon 401 on the current display interface of the electronic device 400 is cancelled only when accessing the location information of the electronic device 400 by the first application ends.

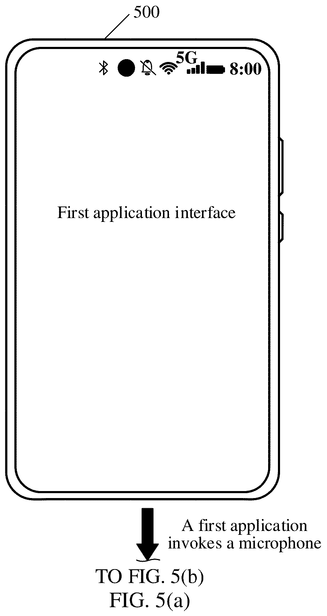

For example, FIG. 5(a) to FIG. 5(c) are a diagram of an interface of another access reminding method according to an embodiment of this application.

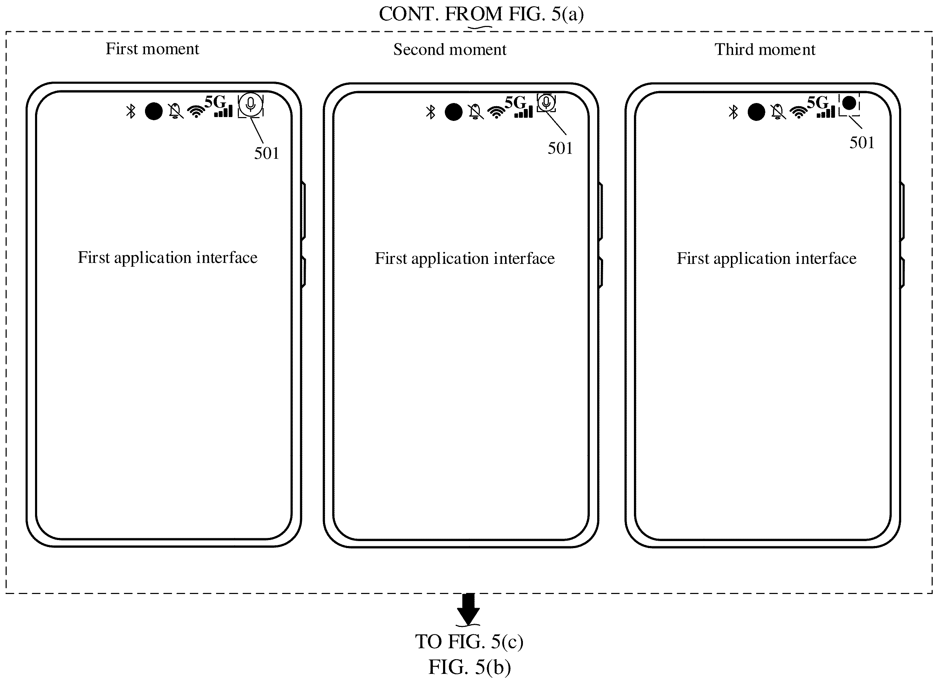

As shown in FIG. 5(a), an electronic device 500 is currently using a first application. When a user invokes a microphone of the electronic device 500 through the first application, a display interface of the electronic device 500 is switched to that shown in FIG. 5(b).

As shown in FIG. 5(b), an icon 501 is displayed in a status bar of the electronic device 500. The icon 501 is used to remind the user that the first application is accessing the microphone of the electronic device 500. The icon 501 may be displayed in the status bar of the electronic device 500, but the icon 501 does not depend on the status bar.

In a display manner, in the status bar of the electronic device 500, the icon 501 animates from left to right with a gradual reduction in size.

In some embodiments, after a behavior of accessing the microphone of the electronic device 500 by the first application is detected, a display state of the icon 501 gradually changes from a specific icon to an indication element. For example, for a change process, refer to FIG. 5(b): A display form of the icon 501 at a first moment is a microphone icon; at a second moment in animation playing, the display form of the icon 501 is a microphone icon smaller than that at the first moment; and at a third moment in animation playing, the display form of the icon 501 is the indication element.

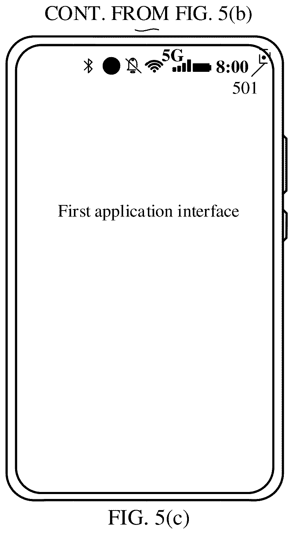

As shown in FIG. 5(c), after playing of the animation of the icon 501 ends, the icon 501 may be displayed, in the form of the indication element in real time, in the status bar of the electronic device 500.

In some embodiments, the icon 501 has a color identifier, for example, may be yellow, or may be another color. A color of the icon 501 may be determined based on a color corresponding to the microphone or the like.

In some embodiments, when the icon 501 is presented in the form of the indication element, a color of the indication element is the same as the color identifier of the icon 501.

In some embodiments, based on FIG. 5(c), after the user hides the status bar of the electronic device 500, the icon 501 is still displayed on the current display interface of the electronic device 500, and is not synchronously hidden with the status bar. In a process in which the first application accesses the microphone of the electronic device 500, the icon 501 is always displayed on the current display interface of the electronic device 500. Displaying of the icon 501 on the current display interface of the electronic device 500 is cancelled only when accessing the microphone of the electronic device 400 by the first application ends.

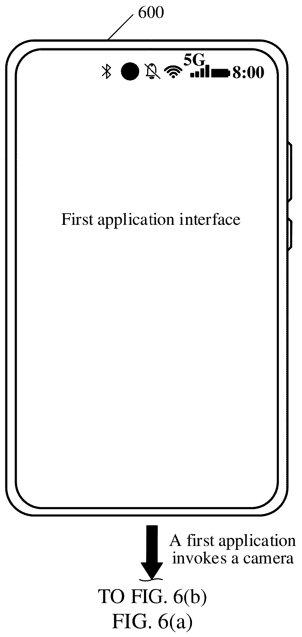

For example, FIG. 6(a) to FIG. 6(d) are a diagram of an interface of another access reminding method according to an embodiment of this application.

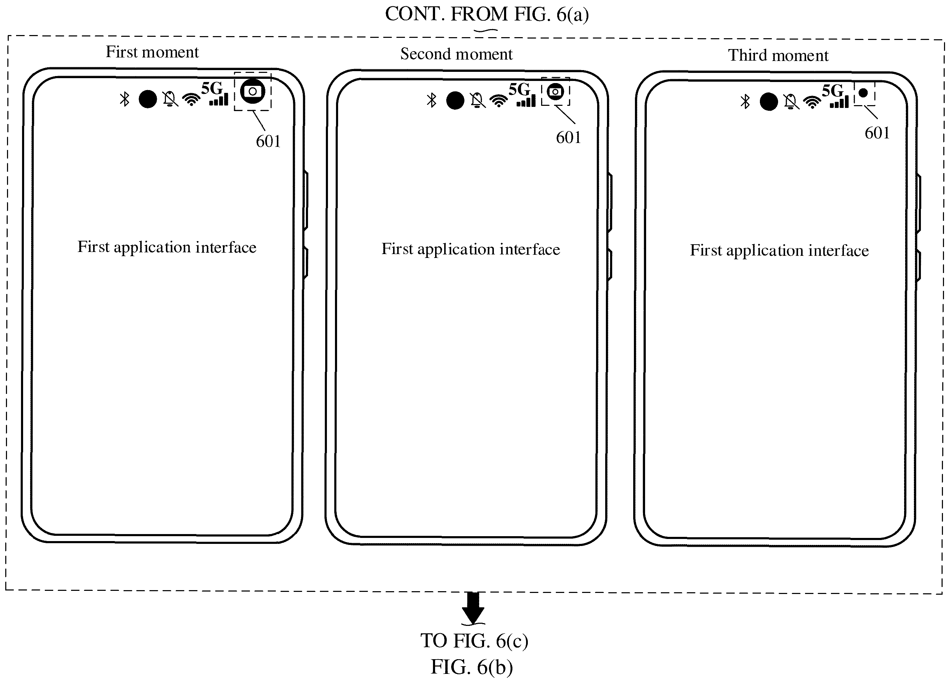

As shown in FIG. 6(a), an electronic device 600 is currently using a first application. When a user invokes a camera of the electronic device 500 through the first application, a display interface of the electronic device 600 is switched to that shown in FIG. 6(b).

As shown in FIG. 6(b), an icon 601 is displayed in a status bar of the electronic device 600. The icon 601 is used to remind the user that the first application is accessing the camera of the electronic device 600. The icon 601 may be displayed in the status bar of the electronic device 600, but the icon 601 does not depend on the status bar.

In a display manner, in the status bar of the electronic device 600, the icon 601 animates from left to right with a gradual reduction in size.

In some embodiments, after a behavior of accessing the microphone of the electronic device 600 by the first application is detected, a display state of the icon 601 gradually changes from a specific icon to an indication element. For example, for a change process, refer to FIG. 6(b): A display form of the icon 601 at a first moment is a camera icon; at a second moment in animation playing, the display form of the icon 601 is a camera icon smaller than that at the first moment; and at a third moment in animation playing, the display form of the icon 601 is the indication element.

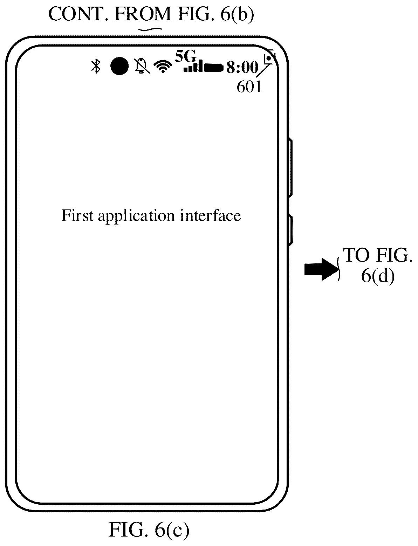

As shown in FIG. 6(c), after playing of the animation of the icon 601 ends, the icon 601 may be displayed, in the form of the indication element in real time, in the status bar of the electronic device 600.

In some embodiments, the icon 601 has a color identifier, for example, may be red, or may be another color. A color of the icon 601 may be determined based on a color corresponding to the camera or the like.

In some embodiments, when the icon 601 is presented in the form of the indication element, a color of the indication element is the same as the color identifier of the icon 601.

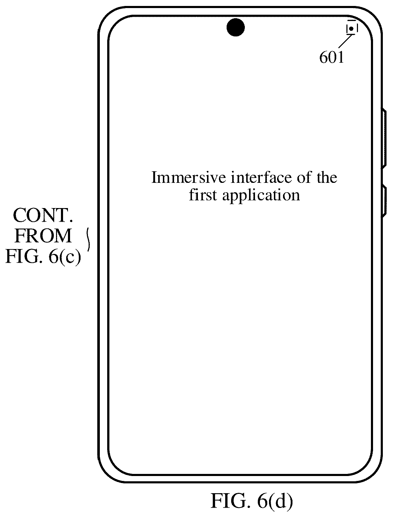

As shown in FIG. 6(d), based on FIG. 6(c), when the display interface of the electronic device 600 is switched to an immersive interface of the first application, the status bar is no longer displayed on the display interface of the electronic device 600. In this case, the icon 601 is still displayed on the current display interface of the electronic device 600, and does not disappear synchronously with the status bar. In a process in which the first application accesses the camera of the electronic device 600, the icon 601 is always displayed on the current display interface of the electronic device 600. Displaying of the icon 601 on the current display interface of the electronic device 600 is cancelled only when accessing the camera of the electronic device 400 by the first application ends.

In embodiments of this application, in a process in which an application accesses a system sensitive resource, an access behavior of the application can be explicitly and clearly presented on a display interface of a device, and the presented access behavior is always displayed on an upper layer without depending on a status bar and being obstructed by other display content. This can enhance user perception of a behavior of accessing the system sensitive resource, and achieve consumer perception of "transparency and privacy security".

In addition, when it is detected that the application accesses the system sensitive resource, a corresponding animation may be first played for reminding, and then an indication element is presented for reminding, so that a real-time behavior of accessing the system sensitive resource by the application can be more explicitly presented.

In addition, for access to different system sensitive resources, different color identifiers may be used for presentation, so that the user can directly perceive, based on a color of an indication element, a category of a currently accessed system sensitive resource, and user perception of a behavior of accessing the system sensitive resource can be further enhanced.

It should be understood that embodiments of this application are described by using an example in which the system sensitive resource is the location information, the microphone, or the camera of the electronic device. However, this does not constitute a limitation on an applicable scenario of an application scope of embodiments of this application. Embodiments provided in this application are also applicable to a process of accessing another system sensitive resource.

It should be further understood that, in embodiments of this application, a presentation location of the icon used to remind the user that the application is accessing the system sensitive resource is not limited. For example, the icon may be presented on a top window of the display interface of the electronic device, or may be presented in the status bar of the electronic device. In embodiments of this application, a presentation form of the icon used to remind the user that the application is accessing the system sensitive resource is not limited. For example, the icon may be presented in a form of a combination of an animation and an indication element, may be presented in a form of an indication element, or may be presented in another form or a combination of a plurality of other forms.

Optionally, the icon may be replaced with another identifier, for example, a digital identifier, a symbol identifier, or a text identifier.

The indication element is a display element used for a specific indication function. The indication element may be, for example, a display element like an indication dot, an indication icon, an indication number, an indication text, or an indication symbol. A display effect of the indication dot may be a colored bright dot displayed on a screen of the electronic device.

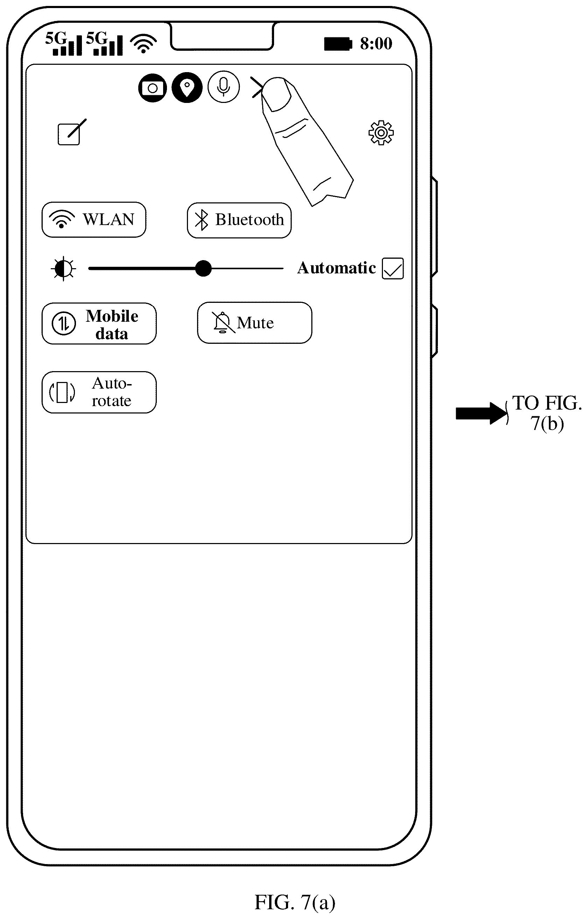

For example, FIG. 7(a) to FIG. 7(c) are a diagram of an interface for setting privacy access permission for an application according to an embodiment of this application;

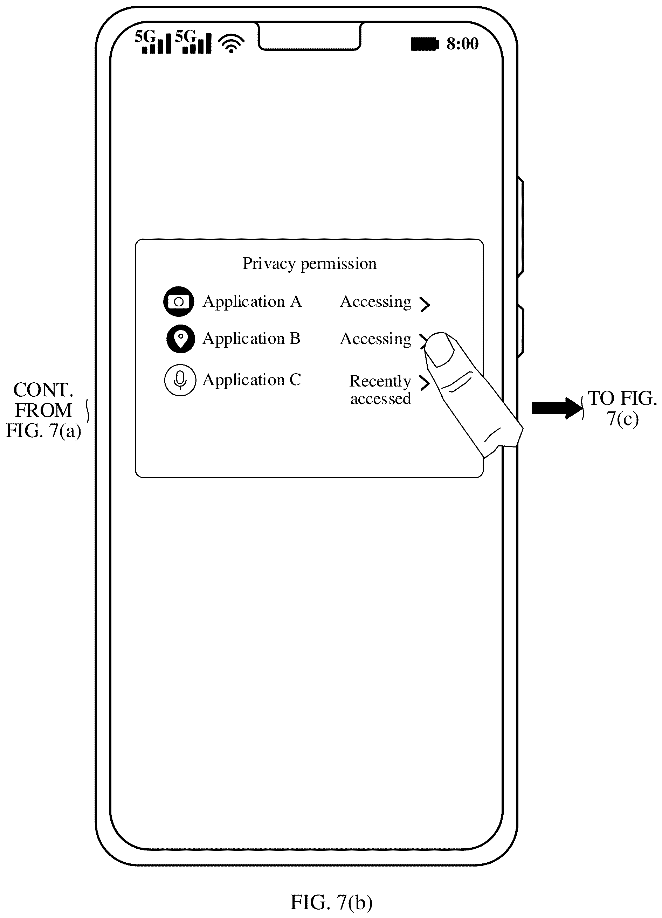

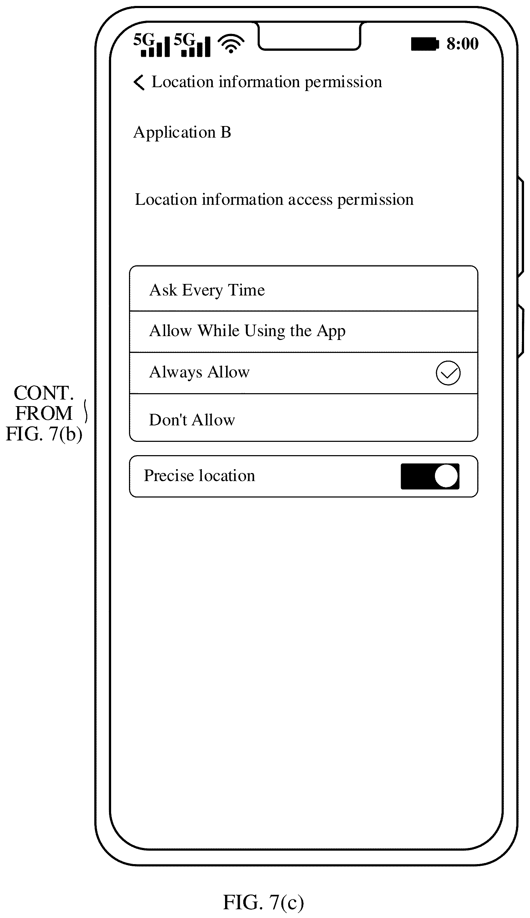

As shown in FIG. 7(a), when a user switches a display interface of an electronic device to a control center interface, a first entry is displayed on the control center interface, and a presentation form of the first entry may be an icon of a system resource that is being accessed and/or just accessed, and/or an icon of a corresponding application. The user may switch, by tapping the first entry, the display interface of the electronic device to an interface for setting privacy permission shown in FIG. 7(b). On the interface, an application that is accessing a system sensitive resource and/or an application that has recently accessed a system sensitive resource are displayed, and icons of the system sensitive resources accessed by these applications are displayed. For example, when an application A of the electronic device is invoking a camera, an application B is accessing location information, and an application C has recently invoked a microphone, the application A, an icon of the camera accessed by the application A, the application B, an icon of the location information accessed by the application B, the application C, and an icon of the microphone accessed by the application C are correspondingly displayed on the interface. When the user taps an entry for setting privacy permission of the application B, the display interface of the electronic device is switched to an interface for setting location information access permission for the application B shown in FIG. 7(c). On the interface, the location information access permission for the application B can be set, for example, can be set to one of several types of permission: Ask Every Time, Allow While Using the App, Always Allow, and Don't Allow. In addition, a degree of accessed location information may be further set, for example, setting to access a precise location.

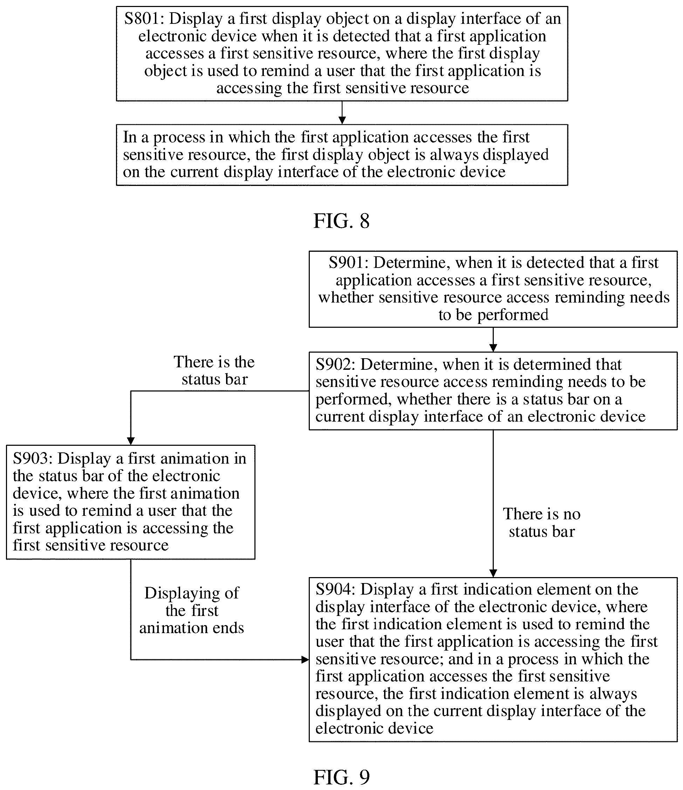

For example, FIG. 8 is a schematic flowchart of an access reminding method 800 according to an embodiment of this application.

As shown in FIG. 8, the method 800 includes the following steps.

S801: Display a first display object on a display interface of an electronic device when it is detected that a first application accesses a first sensitive resource, where the first display object is used to remind a user that the first application is accessing the first sensitive resource.

In a process in which the first application accesses the first sensitive resource, the first display object is always displayed on the current display interface of the electronic device.

In some embodiments, the first display object is drawn by using a trusted execution environment TEE.

In some embodiments, after the first display object is drawn by using the trusted execution environment TEE, display configuration is performed on the first display object in the TEE. An instruction that can be identified by hardware can be generated by using the display configuration. The instruction that can be identified by hardware is stored in a security zone, so that a hardware display driver displays the first display object on a first layer based on the instruction that can be identified by hardware. The first layer is an upper layer, and the upper layer may be a non-overlayable layer and/or a tamper-proof layer.

The security zone is a trusted environment zone in a system of the electronic device. The security zone may be a zone independent of the TEE, the security zone may be a zone that intersects with the TEE, or the security zone may belong to the TEE.

In some embodiments, the first layer may be an uppermost layer in all layers corresponding to the current display interface of the electronic device.

The first layer may be a layer specially created by the TEE for displaying the first display object.

In some embodiments, the first display object displayed on the first layer is drawn by using the TEE, so that the first layer has a security attribute. The security attribute of the first layer may reflect that the first layer has an access restriction. For example, access permission is that the TEE is readable and writable, and a DSS IP is readable. This can prevent the first layer and the first display object displayed on the first layer from being tampered with.

The first application may be, for example, a map application (for example, Petal Maps), a chat application (for example, MeeTime), a conference application, or a video application (for example, HUAWEI Video). Alternatively, the first application may be any application installed on the electronic device. This is not limited in this application.

The first sensitive resource may be, for example, location information, a microphone, or a camera of the electronic device, or the first sensitive resource may be another system resource. This is not limited in this application.

In some embodiments, the first display object may be a first indication element.

The first indication element is a display element used for a specific indication function. The first indication element may be, for example, a display element like an indication dot, an indication icon, an indication number, an indication text, or an indication symbol. A display effect of the indication dot may be a colored bright dot displayed on a screen of the electronic device.

The first display object may have a color corresponding to the first sensitive resource. For example, the first indication element may be an indication element with a specific color, and both a presentation form of the first indication element and a presentation location of the first indication element on the display interface of the electronic device are not limited.

In some embodiments, when it is detected that the first application accesses the first sensitive resource, an animation used to remind the user that the first application is accessing the first sensitive resource is first displayed on the current display interface of the electronic device. After displaying of the animation ends, the first display object used to remind the user that the first application is accessing the first sensitive resource is displayed on the current display interface of the electronic device.

In an example, in the process in which the first application accesses the first sensitive resource, if the system creates a new display interface, the new display interface is located below the first layer in terms of a hierarchy. In other words, in the process in which the first application accesses the first sensitive resource, the first display object is not overlaid by any display element or display interface.

In this embodiment of this application, in the process in which the application accesses the system sensitive resource, an access behavior of the application can be explicitly and clearly presented on the display interface of the device, and the presented access behavior is always displayed on the upper layer without depending on a status bar and being obstructed by other display content. This can enhance user perception of a behavior of accessing the system sensitive resource, and achieve consumer perception of "transparency and privacy security".

For example, an example in which the first display object is the first indication element is used. FIG. 9 is a schematic flowchart of another access reminding method 900 according to an embodiment of this application.

S901: Determine, when it is detected that a first application accesses a first sensitive resource, whether sensitive resource access reminding needs to be performed. If sensitive resource access reminding needs to be performed, S902 is performed.

It may be understood that the detected access of the first application to the first sensitive resource herein refers to a detected behavior that is of accessing the first sensitive resource and that is triggered by the first application, and does not mean that the first application has been in an accessing state.

In some embodiments, when the behavior of accessing the first sensitive resource by the first application is detected, privacy access permission information of the first application is obtained. When privacy access permission for the first application allows the first application to access the first sensitive resource, it is determined that sensitive resource access reminding needs to be performed. When the privacy access permission for the first application does not allow the first application to access the first sensitive resource, or does not allow the first application to access the first sensitive resource at a current stage, it is determined that sensitive resource access reminding does not need to be performed.

The privacy access permission information of the first application may be set by a user, or may be set by a system by default.

The first application runs on an electronic device.

S902: Determine whether there is a status bar on a current display interface of the electronic device. If there is the status bar, S903 is performed; or if there is no status bar, S904 is performed.

This step may also be described as: determining whether the status bar is displayed on the current display interface of the electronic device.

S903: Display a first animation in the status bar of the electronic device. After displaying of the first animation ends, S904 is further performed. The first animation is used to remind the user that the first application is accessing the first sensitive resource.

In some embodiments, the first animation may be dynamic playing of an icon corresponding to the first sensitive resource, for example, may be dynamic playing of the icon corresponding to the first sensitive resource from left to right, and/or may be dynamic playing of the icon corresponding to the first sensitive resource with gradual reduction in size, and/or may be playing of the icon corresponding to the first sensitive resource switching in different presentation forms or different presentation sizes. The first animation may alternatively be another animation that can be used to remind the user that the first application is accessing the first sensitive resource, for example, a text animation or a symbol animation.

In some embodiments, the status bar may be replaced with another interface control of the electronic device. For example, the first animation may be displayed in a top window in the display interface of the electronic device, or the first animation may be displayed in another location in the display interface of the electronic device. This is not limited in this application.

S904: Display a first indication element on the display interface of the electronic device, where the first indication element is used to remind the user that the first application is accessing the first sensitive resource; and in a process in which the first application accesses the first sensitive resource, the first indication element is always displayed on the current display interface of the electronic device.

An explanation of this step is similar to an explanation of S801. For brevity, details are not described herein again.

In some embodiments, the first indication element may be an indication element with a specific color, and both a presentation form of the first indication element and a presentation location of the first indication element on the display interface of the electronic device are not limited.

A color of the first indication element may be determined based on the first sensitive resource. When sensitive resources are different, colors of corresponding indication elements are different.

In this embodiment of this application, when the application triggers the behavior of accessing the sensitive resource, explicit reminding is performed in real time for the access behavior. When there is the status bar or another interface control that can present an animation, the animation is preferentially presented in the status bar or the another interface control that can present the animation, so that the real-time behavior of accessing the system sensitive resource by the application can be more explicitly presented. After displaying of the animation ends, a corresponding indication element is displayed. The indication element is displayed on an upper layer of a display system, and is presented throughout the entire process in which the application accesses the sensitive resource without being obstructed by any new interface.

In addition, for access to different system sensitive resources, different colors may be used for presenting animations and/or indication elements, so that the user can directly perceive, based on a color of an indication element, a category of a currently accessed system sensitive resource, and user perception of the behavior of accessing the system sensitive resource can be further enhanced.

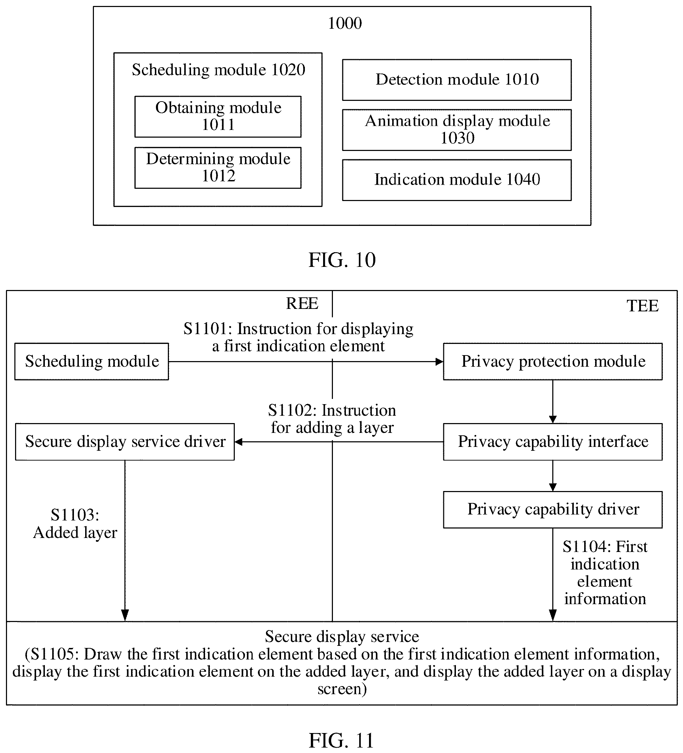

For example, an example in which the first display object is the first indication element is used. FIG. 10 is a diagram of a functional module of an access reminding apparatus 1000 according to an embodiment of this application.

As shown in FIG. 10, the apparatus 100 includes:
a detection module 1010, configured to detect a behavior of accessing a system sensitive resource by an application; and
a scheduling module 1020, configured to determine, when it is detected that a first application accesses a first sensitive resource, whether sensitive resource access reminding needs to be performed.

In some embodiments, the scheduling module 1020 includes an obtaining module 1011 and a determining module 1012.

The obtaining module 1011 is configured to obtain privacy access permission information of the first application when a behavior of accessing the first sensitive resource by the first application is detected.

For example, the privacy access permission information of the first application may include one or more of allowing the first application to access the first sensitive resource, not allowing the first application to access the first sensitive resource, allowing the first application to access the first sensitive resource during use of the first application, and allowing the first application to access the first sensitive resource in a specific time period. The privacy access permission information of the first application may further include other permission information. This is not limited in this application.

The determining module 1012 is configured to determine, based on the privacy access permission information of the first application, whether sensitive resource access reminding needs to be performed.

In some embodiments, when privacy access permission for the first application allows the first application to access the first sensitive resource, the determining module 1012 determines that sensitive resource access reminding needs to be performed. When the privacy access permission for the first application does not allow the first application to access the first sensitive resource, or does not allow the first application to access the first sensitive resource at a current stage, the determining module 1012 determines that sensitive resource access reminding does not need to be performed.

In some embodiments, the determining module 1012 is further configured to determine whether there is a status bar or another interface control that can display an animation in a current display interface of an electronic device.

An animation display module 1030 is configured to display a first animation in the status bar or the another interface control that can display the animation, when sensitive resource access reminding needs to be performed, and there is the status bar or the another interface control that can display the animation in the current display interface of the electronic device.

For an explanation of the first animation, refer to the descriptions of S903 in the embodiment shown in FIG. 9. For brevity, details are not described herein again.

The animation display module 1030 may be further configured to send first indication information to the scheduling module 1020 after playing of the first animation ends. The first indication information indicates that playing of the first animation ends.

The scheduling module 1020 is further configured to send second indication information to an indication module after the animation display module 1010 ends playing of the first animation (that is, after the first indication information is received). The second indication information indicates the indication module 1040 to display a first indication element.

The indication module 1040 is configured to display the first indication element through the display module after the second indication information sent by the scheduling module 1020 is received.

For an explanation of the first indication element, refer to the descriptions of S904 in the embodiment shown in FIG. 9. For brevity, details are not described herein again.

To better understand non-overlayability of a first display object, an example in which the first display object is the first indication element is used. For example, FIG. 11 is a diagram of a method for displaying an indication element according to an embodiment of this application. The method is implemented by a plurality of modules located in a trusted execution environment TEE and a plurality of modules located in a rich execution environment REE. The trusted execution environment TEE includes a privacy protection module, a privacy capability interface, and a privacy capability driver. The rich execution environment REE includes a scheduling module and a secure display service driver. Specifically, the method includes the following steps.

S1101: When determining that sensitive resource access reminding needs to be performed, the scheduling module sends, to the privacy protection module, an instruction for displaying a first indication element, where the instruction may also be described as an instruction for enabling the first indication element.

In some embodiments, when playing of a first animation ends, the scheduling module sends, to the privacy protection module, the instruction for displaying the first indication element.

This step may be understood as follows: When the scheduling module determines that sensitive resource access reminding needs to be performed, the scheduling module transmits, to a TEE side, the instruction for displaying the first indication element.

S1102: When receiving the instruction for displaying the first indication element, the privacy protection module sends, to the secure display service driver located in the REE by invoking the privacy capability interface, an instruction for adding a layer, where the added layer is used to display the first indication element.

In some embodiments, after the privacy protection module invokes the privacy capability interface, the invoked privacy capability interface invokes, through a privacy agent, the secure display service driver in the REE to add the layer.

S1103: The secure display service driver adds a layer when receiving the instruction for adding a layer, and sends the added layer to a secure display service.

The added layer is an upper layer, and the upper layer may be a non-overlayable layer and/or a tamper-proof layer.

S1104: The privacy capability interface obtains first indication element information by invoking the privacy capability driver, and sends the first indication element information to the secure display service.

The first indication element information may include one or more of a size of the first indication element, a color of the first indication element, and a display location of the first indication element. The first indication element information may further include other display information of the indication element.

S1103 and S1104 may be performed simultaneously, or may be performed not simultaneously.

S1105: After receiving the added layer and the first indication element information, the secure display service draws the first indication element based on the first indication element information, displays the first indication element on the added layer, and displays the added layer on a display.

In some embodiments, after the first indication element is drawn by using the trusted execution environment TEE, display configuration is performed on the first indication element in the TEE. An instruction that can be identified by hardware may be generated by using the display configuration, so that a hardware display driver (for example, the secure display service shown in FIG. 11) displays the first indication element on the added layer based on the instruction that can be identified by hardware. Similarly, when the scheduling module determines that displaying of the indication element needs to be cancelled, a process of cancelling displaying of the indication element may be as follows:
(1) When the first indication element is currently displayed, the scheduling module sends, to the privacy protection module when determining that sensitive resource access reminding does not need to be performed, an instruction for cancelling displaying of the first indication element. The instruction may also be described as an instruction for disabling the first indication element.
(2) When receiving the instruction for cancelling displaying of the first indication element, the privacy protection module sends, to the secure display service driver located in the REE by invoking the privacy capability interface, an instruction for deleting the layer that displays the first indication element.

In some embodiments, after the privacy protection module invokes the privacy capability interface, the invoked privacy capability interface invokes, through the privacy agent, the secure display service driver in the REE to delete the layer that displays the first indication element.

(3) When receiving the instruction for deleting the layer that displays the first indication element, the secure display service driver deletes the layer that displays the first indication element, and at the same time, notifies the secure display service to cancel displaying of the layer that displays the first indication element.

In this embodiment of this application, when the indication element needs to be displayed, the trusted execution environment invokes the secure display service driver to draw a layer for displaying the first indication element. The layer is controlled by the trusted execution environment. Based on a feature of the trusted execution environment (TEE), in a trusted user interaction (TUI) process, a display screen of an electronic device is controlled by the TEE, so that the layer that displays the first indication element is always displayed on an upper layer and is not overlaid by another display interface in the trusted interaction process. In this way, non-overlayability of displaying of the first indication element is implemented. The trusted interface process may be understood as a process in which the application accesses the system sensitive resource, that is, a process in which sensitive resource access reminding needs to be performed.

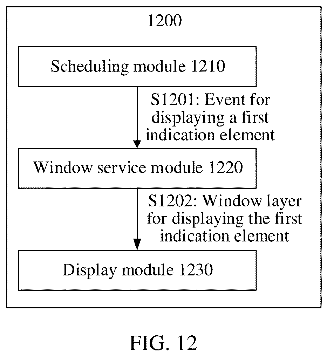

For example, an example in which the first display object is the first indication element is used. FIG. 12 is a diagram of another method for displaying a display object according to an embodiment of this application. The method is implemented by a scheduling module 1210, a window service module 1220, and a display module 1230 in cooperation. Specifically, the method includes the following steps.

S1201: When determining that sensitive resource access reminding needs to be performed, the scheduling module 1210 sends, to the window service module 1220, an instruction for displaying a first indication element, where the instruction may also be described as an instruction for enabling the first indication element.

In some embodiments, when playing of a first animation ends, the scheduling module 1210 sends, to the window service module 1220, the instruction for displaying the first indication element.

S1202: When receiving the instruction for displaying the first indication element, the window service module 1220 creates a highest-level layer. Further, the display module 1230 displays the first indication element on the highest-level layer.

In this embodiment of this application, when a display object needs to be displayed, the display object is drawn by creating a new window. In a process in which an application accesses a system sensitive resource, a window for displaying the display object is always a topmost window in a plurality of windows corresponding to a current display interface of an electronic device, and is not overlaid by another display interface. In this way, non-overlayability of displaying of the display object can be implemented.

Similarly, when the scheduling module determines that displaying of the indication element needs to be cancelled, a process of cancelling displaying of the indication element may be as follows:
(1) When determining that sensitive resource access reminding does not need to be performed, the scheduling module 1210 sends, to the window service module 1220, an instruction for cancelling displaying of the first indication element, where the instruction may also be described as an instruction for disabling the first indication element.
(2) When receiving the instruction for cancelling displaying of the first indication element, the window service module 1220 deletes a current topmost window. Correspondingly, the display module 1230 cancels displaying of the topmost window.

One or more of the modules or units described in this specification may be implemented by software, hardware, or a combination thereof. When any one of the foregoing modules or units is implemented by software, the software exists in a form of computer program instructions, and is stored in a memory. A processor may be configured to execute the program instructions and implement the foregoing method procedure. The processor may include but is not limited to at least one of the following various compute devices that run software: a central processing unit (central processing unit, CPU), a microprocessor, a digital signal processor (DSP), a microcontroller unit (microcontroller unit, MCU), an artificial intelligence processor, or the like. Each compute device may include one or more cores used to execute software instructions to perform operations or processing. The processor may be built in a SoC (system on chip) or an application-specific integrated circuit (application-specific integrated circuit, ASIC), or may be an independent semiconductor chip. In addition to the core configured to perform operations or processing by executing the software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to execute the foregoing method procedure.

When the modules or units described in this specification are implemented by using software, all or some of the modules or units may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, a part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An access reminding method, wherein the method is applied to an electronic device, and the method comprises:
displaying a display object on a display interface of the electronic device when it is detected that a first application accesses a sensitive resource, wherein the display object is used to remind a user that the first application is accessing the sensitive resource, and the display object is drawn by using a trusted execution environment TEE; and
in a process in which the first application accesses the sensitive resource, the display object is always displayed on the current display interface of the electronic device.

2. The method according to claim 1, wherein after being drawn by using the TEE, the display object is displayed on a first layer, and the first layer is an upper layer; and in the process in which the first application accesses the sensitive resource, the display object is always displayed on the current display interface of the electronic device, wherein the upper layer is a non-overlayable layer and/or a tamper-proof layer.

3. The method according to claim 1 or 2, wherein before the displaying the display object on the display interface of the electronic device, the method further comprises:
displaying a first animation in a first interface control when it is detected that the first application accesses the sensitive resource, wherein the first animation is used to remind the user that the first application is accessing the sensitive resource; and
the displaying the display object on the display interface of the electronic device comprises:
displaying the display object on the display interface of the electronic device when displaying of the first animation ends.

4. The method according to claim 3, wherein the displaying the first animation in the first interface control comprises:
determining whether the first interface control is displayed on the current display interface of the electronic device; and
displaying the first animation in the first interface control when the first interface control is displayed on the current display interface of the electronic device.

5. The method according to claim 4, wherein the first interface control comprises a status bar.

6. The method according to any one of claims 1 to 5, wherein the displaying the display object on the display interface of the electronic device when it is detected that the first application accesses the sensitive resource comprises:
determining, based on access permission information of the first application when a behavior of accessing the sensitive resource by the first application is detected, whether access reminding needs to be performed; and
displaying the display object on the display interface of the electronic device when it is determined that access reminding needs to be performed.

7. The method according to claim 6, wherein the determining, based on the access permission information of the first application, whether access reminding needs to be performed comprises:
obtaining the access permission information of the first application, wherein the access permission information of the first application is set by the user or is set by a system by default; and
determining, when the access permission information of the first application comprises information indicating that the first application is allowed to access the sensitive resource, that access reminding needs to be performed.

8. The method according to any one of claims 1 to 7, wherein a color of the display object is a first color, and the first color corresponds to the sensitive resource.

9. The method according to any one of claims 1 to 8, wherein the method further comprises:
cancelling displaying of the display object on the display interface of the electronic device when it is detected that accessing the sensitive resource by the first application ends.

10. The method according to any one of claims 1 to 9, wherein the display object comprises an indication element.

11. The method according to any one of claims 1 to 10, wherein the sensitive resource comprises one or more of location information of the electronic device, a microphone of the electronic device, and a camera of the electronic device.

12. An electronic device, wherein the electronic device comprises:
a display module, configured to display a display object on a display interface of the electronic device when it is detected that a first application accesses a sensitive resource, wherein the display object is used to remind a user that the first application is accessing the sensitive resource, and the display object is drawn by using a trusted execution environment TEE; and
in a process in which the first application accesses the sensitive resource, the display object is always displayed on the current display interface of the electronic device.

13. The electronic device according to claim 12, wherein after being drawn by using the TEE, the display object is displayed on a first layer, and the first layer is an upper layer; and in the process in which the first application accesses the sensitive resource, the display object is always displayed on the current display interface of the electronic device, wherein the upper layer is a non-overlayable layer and/or a tamper-proof layer.

14. The electronic device according to claim 12 or 13, wherein the display module is specifically configured to:
display a first animation in a first interface control when it is detected that the first application accesses the sensitive resource, wherein the first animation is used to remind the user that the first application is accessing the sensitive resource; and
display the display object on the display interface of the electronic device when displaying of the first animation ends.

15. The electronic device according to claim 14, wherein the electronic device further comprises:
a determining module, configured to determine whether the first interface control is displayed on the current display interface of the electronic device; and
the display module is specifically configured to:
display the first animation in the first interface control when the first interface control is displayed on the current display interface of the electronic device.

16. The electronic device according to claim 15, wherein the first interface control comprises a status bar.

17. The electronic device according to any one of claims 12 to 16, wherein
the determining module comprised in the electronic device is further configured to:
determine, based on access permission information of the first application when a behavior of accessing the sensitive resource by the first application is detected, whether access reminding needs to be performed; and
the display module is further specifically configured to:
display the display object on the display interface of the electronic device when it is determined that access reminding needs to be performed.

18. The electronic device according to claim 17, wherein the electronic device further comprises:
an obtaining module, configured to obtain the access permission information of the first application, wherein the access permission information of the first application is set by the user or is set by a system by default; and
the determining module is specifically configured to determine, when the access permission information of the first application comprises information indicating that the first application is allowed to access the sensitive resource, that access reminding needs to be performed.

19. The electronic device according to any one of claims 12 to 18, wherein a color of the display object is a first color, and the first color corresponds to the sensitive resource.

20. The electronic device according to any one of claims 12 to 19, wherein the display module is further configured to:
cancel displaying of the display object on the display interface of the electronic device when it is detected that accessing the sensitive resource by the first application ends.

21. The electronic device according to any one of claims 12 to 20, wherein the display object comprises an indication element.

22. The electronic device according to any one of claims 12 to 21, wherein the sensitive resource comprises one or more of location information of the electronic device, a microphone of the electronic device, and a camera of the electronic device.

23. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is caused to perform the method according to any one of claims 1 to 11.

24. A computer-readable storage medium, wherein the storage medium stores a program or instructions; and when the program or the instructions are run, the method according to any one of claims 1 to 11 is implemented.

25. A chip, wherein the chip stores instructions, and when the instructions are run, the method according to any one of claims 1 to 11 is implemented.

26. A computer program product, wherein the computer program product stores a program or instructions, and when the program or the instructions are run, the method according to any one of claims 1 to 11 is implemented.
